# EUROPÄISCHE PATENTANMELDUNG

(11) **EP 4 835 810 A1**
(43) Veröffentlichungstag der Anmeldung: **04.11.2026**
(21) Anmeldenummer: 25206997.6
(22) Anmeldetag: 06.10.2025
(51) Int. Cl.: G06T 7/00

(54) **VORRICHTUNG ZUM ERKENNEN VON FEHLSTELLEN EINER VERPACKUNG UND/ODER EINES PRODUKTES**

(30) Priorität: 30.04.2025 DE 102025116757
(71) Anmelder: MULTIVAC Marking & Inspection GmbH & Co. KG, 32130 Enger (DE)
(72) Erfinder: ISAAK, Dennis, 33647 Bielefeld (DE); SIEKMANN, Daniel, 32130 Enger (DE)
(74) Vertreter: Grünecker Patent- und Rechtsanwälte PartG mbB

(57) **Zusammenfassung**

Vorrichtung zum Erkennen von Fehlstellen einer Verpackung und/oder eines Produktes , die Vorrichtung umfassend eine Infrarot-Lichtquelle, einen Infrarotdetektor und eine Auswerteinrichtung, wobei der Infrarotdetektor und die Infrarot-Lichtquelle so angeordnet sind, dass der Infrarotdetektor ein Bild einer Verpackung und/oder eines Produktes in Auflicht und/oder Durchlicht aufnehmen kann, und wobei die Auswerteinrichtung ausgebildet ist, basierend auf dem Bild ein Wahrscheinlichkeitsbild zu bestimmen, wobei das Wahrscheinlichkeitsbild Bereichen des Bildes einen Wahrscheinlichkeitswert zuordnet, der indikativ für das Vorhandensein einer Fehlstelle in den Bereichen ist, und wobei die Auswerteinrichtung ausgebildet ist, das Wahrscheinlichkeitsbild mittels eines Bereichserkennungsalgorithmus auszuwerten und zu bestimmen, ob eine Gruppe von zusammenhängenden Bereichen im Wahrscheinlichkeitsbild für jeden Bereich einen Wahrscheinlichkeitswert oberhalb eines Schwellwertes aufweist, und eine für eine Fehlstelle indikative Information auszugeben, wenn im Wahrscheinlichkeitsbild wenigstens eine Gruppe von zusammenhängenden Bereichen vorhanden ist, für die jeder Bereich einen Wahrscheinlichkeitswert oberhalb des Schwellwertes aufweist.

## Beschreibung

Die vorliegende Erfindung betrifft eine Vorrichtung zum Erkennen von Fehlstellen einer Verpackung und/oder eines Produktes gemäß Anspruch 1 sowie ein Verfahren zum Erkennen von Fehlstellen einer Verpackung und/oder eines Produktes entsprechend Anspruch 9.

### Stand der Technik

Aus dem Stand der Technik sind Vorrichtungen und Verfahren zum Prüfen von Verpackungen oder Produkt auf Fehlstellen bekannt. Diese umfassen üblicherweise komplexe Analysen wie beispielsweise Hyperspektralanalysen, Radar-Imaging oder bildgebende Verfahren mit Röntgenstrahlung. Die hierfür eingesetzten Vorrichtungen wie beispielsweise Röntgenstrahler sind kostenintensiv. Gleichzeitig ist die Auswertung der aufgenommenen Bildinformationen schwierig und mit Fehlern behaftet.

### Aufgabe

Ausgehend vom bekannten Stand der Technik besteht die zu lösende technische Aufgabe somit darin, eine Vorrichtung und ein Verfahren zum Erkennen von Fehlstellen von Verpackungen und/oder Produkten anzugeben, die kostengünstig realisiert werden können und gleichzeitig Fehlstellen möglichst zuverlässig erkennen.

### Lösung

Diese Aufgabe wird erfindungsgemäß durch die Vorrichtung zum Erkennen von Fehlstellen einer Verpackung und/oder eines Produktes gemäß Anspruch 1 sowie das Verfahren zum Erkennen von Fehlstellen einer Verpackung und/oder eines Produktes gemäß Anspruch 9 gelöst. Vorteilhafte Weiterbildungen der Erfindung sind in den Unteransprüchen erfasst.

Die erfindungsgemäße Vorrichtung zum Erkennen von Fehlstellen einer Verpackung und/oder eines Produktes umfasst eine Infrarot-Lichtquelle, einen Infrarotdetektor und eine Auswerteinrichtung, wobei der Infrarotdetektor und die Infrarot-Lichtquelle so angeordnet sind, dass der Infrarotdetektor ein Bild einer Verpackung und/oder eines Produktes in Auflicht und/oder Durchlicht aufnehmen kann, und wobei die Auswerteinrichtung ausgebildet ist, basierend auf dem Bild ein Wahrscheinlichkeitsbild zu bestimmen, wobei das Wahrscheinlichkeitsbild Bereichen des Bildes einen Wahrscheinlichkeitswert zuordnet, der indikativ für das Vorhandensein einer Fehlstelle in den Bereichen ist, und wobei die Auswerteinrichtung ausgebildet ist, das Wahrscheinlichkeitsbild mittels eines Bereichserkennungsalgorithmus auszuwerten und zu bestimmen, ob eine Gruppe von zusammenhängenden Bereichen im Wahrscheinlichkeitsbild für jeden Bereich einen Wahrscheinlichkeitswert oberhalb eines Schwellwertes aufweist, und eine für eine Fehlstelle indikative Information auszugeben, wenn im Wahrscheinlichkeitsbild wenigstens eine Gruppe von zusammenhängenden Bereichen vorhanden ist, für die jeder Bereich einen Wahrscheinlichkeitswert oberhalb des Schwellwertes aufweist.

Dass die Vorrichtung zum Erkennen von Fehlstellen einer Verpackung und/oder eines Produktes ausgebildet ist, ist im Sinne der Erfindung so zu verstehen, dass die Vorrichtung genutzt werden kann, um Fehlstellen einer Verpackung oder Fehlstellen eines Produktes oder Fehlstellen einer Verpackung mit einem darin eingebrachten Produkt feststellen zu können. Zu solchen Fehlstellen können beispielsweise Fehler des Produktes (unzureichende Qualität eines Lebensmittels oder Hinweise auf Verfall des Lebensmittels) oder Fehlstellen einer verschlossenen Verpackung, wie beispielsweise Fehlstellen einer Siegelnaht aufgrund von im Bereich der Siegelnaht befindlichem Produkt, vorgesehen sein. Die Erfindung ist jedoch hinsichtlich der Art der Fehlstellen oder der Art der Verpackungen oder der Produkte nicht beschränkt.

Unter den Produkten können grundsätzlich beliebige Produkte verstanden werden. Bevorzugt sind jedoch insbesondere Lebensmittel, wie beispielsweise Wurstaufschnitt oder Käseaufschnitt, sowie Teig oder Produkte in der Pharmaindustrie, wie beispielsweise Tabletten, vorgesehen. Die Verpackungen, in die diese Produkte abgefüllt oder eingebracht werden können, können beispielsweise flexible Verpackungen (insbesondere Folienbeutel) oder zumindest teilweise starre Verpackungen umfassen. Unter starren Verpackungen, beziehungsweise teilweise starren Verpackungen sind solche Verpackungen zu verstehen, die zumindest einen formstabilen Teil umfassen. Ein Beispiel einer solchen starren Verpackung ist eine Verpackung, die aus einer Verpackungsmulde aus Kunststoff und einer Siegelfolie besteht. Die Verpackungsmulde ist in diesem Fall üblicherweise durch Tiefziehen hergestellt und somit im Wesentlichen starr, wohingegen die Siegelfolie flexibel bzw. weniger starr ist.

Der Begriff des Wahrscheinlichkeitsbildes ist im erfindungsgemäßen Sinne nicht als ein Bild derart zu verstehen, dass darauf die Verpackung oder das Produkt erkennbar sein muss. Stattdessen ist das Wahrscheinlichkeitsbild als eine solche Datenstruktur zu verstehen, die einen Wahrscheinlichkeitswert für das Vorhandensein einer Fehlstelle eindeutig einem Bereich des Originalbildes zuordnet. Das Wahrscheinlichkeitsbild kann beispielsweise in Form einer Matrix dargestellt werden, wobei die Einträge der Matrix einen Wahrscheinlichkeitswert angeben, der einem bestimmten Bereich des aufgenommenen Bildes eindeutig zugeordnet werden kann (durch die Angabe der Zeilen- und Spaltennummer in der Matrix beispielsweise). In einem Beispiel, in dem das Wahrscheinlichkeitsbild eine Matrix ist, die jedem Pixel des Originalbildes einen Wahrscheinlichkeitswert für das Vorhandensein einer Fehlstelle zuordnet, ist das Produkt aus Zeilenanzahl und Spaltenanzahl der Matrix gleich der Anzahl der Pixel des Bildes und die Einträge in der Matrix entsprechen den Pixeln des Originalbildes hinsichtlich ihrer Position.

Die Bereiche, denen das Wahrscheinlichkeitsbild den erfindungsgemäßen Wahrscheinlichkeitswert für das Vorhandensein einer Fehlstelle zuordnet, müssen jedoch nicht mit Pixeln des Bildes identisch sein, sondern können beispielsweise auch Gruppen von Pixeln, wie beispielsweise eine rechteckige oder quadratische Gruppe von Pixeln bestehend aus 4, 9, 16 oder 25 Pixeln, umfassen. In einem solchen Fall ist die Anzahl von Zeilen und Spalten (bei Darstellung des Wahrscheinlichkeitsbildes als Matrix) entsprechend geringer als die Anzahl der Pixel des Originalbildes (Zeilen und Spalten), erlaubt aber dennoch eine eindeutige Zuordnung des Wahrscheinlichkeitswertes zu Gruppen von Pixeln, also einem Bereich, des Bildes.

Es ist dabei erfindungsgemäß nicht zwingend erforderlich (kann jedoch vorgesehen sein), dass das Wahrscheinlichkeitsbild Wahrscheinlichkeitswerte für jeden Bereich des ursprünglichen Bildes zuordnet. Das heißt also, dass es keinen Bereich des Bildes gibt, dem im Wahrscheinlichkeitsbild kein Wahrscheinlichkeitswert zugeordnet ist. Stattdessen kann beispielsweise auch nur ein Teil des Bildes (etwa auf dem bei vorheriger Auswertung des Bildes das Produkt oder die Verpackung erkannt wurde) genutzt werden, um das Wahrscheinlichkeitsbild zu bestimmen

Der Bereichserkennungsalgorithmus verarbeitet bevorzugt nur das Wahrscheinlichkeitsbild. Unter einer Gruppe von zusammenhängenden Bereichen, die von dem Bereichserkennungsalgorithmus erkannt werden, ist dabei zu verstehen, dass diese Bereiche zumindest paarweise im Wahrscheinlichkeitsbild aneinandergrenzen. Im obigen Beispiel des Wahrscheinlichkeitsbildes als Matrix bedeutet dies, dass unter einer Gruppe von Bereichen solche Bereiche zu verstehen sind, bei denen jeweils wenigstens zwei Bereiche Matrix-Einträgen entsprechen, die unmittelbar benachbart sind. Dies gilt beispielsweise für Bereiche bzw. Elemente der Matrix Aᵢⱼ und Aᵢⱼ₊₁ , nicht jedoch für Bereiche Aᵢⱼ und Aᵢⱼ₊₂ , da diese durch den Bereich bzw. das Matrixelement Aᵢⱼ₊₁ voneinander getrennt sind. Insoweit untersucht der Bereichserkennungsalgorithmus das Wahrscheinlichkeitsbild daraufhin, ob es Gruppen von Bereichen gibt, die zusammenhängen und gleichzeitig für jeden dieser Bereiche der Schwellwert oberhalb eines festgelegten Schwellwerts ist.

Der Schwellwert ist als solcher Wert zu verstehen, der als indikativ dafür angesehen wird, dass in dem betreffenden Bereich eine Fehlstelle vorliegt. Werden die Wahrscheinlichkeitswerte in dem Wahrscheinlichkeitsbild beispielsweise als Zahlen zwischen 0 und 1 angegeben, wobei 0 für keine Fehlstelle bzw. eine verschwindende Wahrscheinlichkeit für das Vorhandensein einer Fehlstelle steht und 1 für eine sehr hohe Wahrscheinlichkeit für das Vorhandensein einer Fehlstelle in dem betreffenden Bereich steht, kann der Schwellwert beispielsweise auf 0,7 oder 0,8 oder 0,9 gesetzt werden. Die Erfindung ist hinsichtlich des Schwellwertes jedoch nicht beschränkt und die Wahl des Schwellwertes (ebenso wie die Anzahl der Bereiche, die in dem zusammenhängenden Bereich vorhanden sein müssen) kann von äußeren Bedingungen abhängen, wie beispielsweise einem Bestreben, Verpackungen eher wegen fälschlicherweise positiv erkannter Fehlstellen auszusortieren (falsch positive Erkennung), als das Risiko einzugehen, dass eine Verpackung trotz nicht erkannter Fehlstelle (falsch negative Erkennung) weiterverwendet wird.

Mit der erfindungsgemäßen Vorrichtung wird eine zweistufige Bestimmung einer Fehlstelle realisiert, in dem zunächst das Wahrscheinlichkeitsbild und anschließend eine Bereichserkennung im Wahrscheinlichkeitsbild durchgeführt wird. Hiermit wird die Zuverlässigkeit für das Erkennen von Fehlstellen verbessert. Durch diese Ausgestaltung sowie die Verwendung eines Infrarotbildes können Kosten reduziert werden.

Es kann vorgesehen sein, dass die Auswerteinrichtung zum Bestimmen des Wahrscheinlichkeitsbildes ein neuronales Netz, insbesondere ein Convolutional Neural Network umfasst.

Ein besonders geeignetes neuronales Netz für die Bestimmung des Wahrscheinlichkeitsbildes ist das Deep Learning Tool der MVTec Software GmbH. Dieses ist grundsätzlich bekannt und kann durch Eingabe geeigneter Trainingsdaten auf das Erkennen von Fehlstellen trainiert werden. Bevorzugt kann vorgesehen sein, dass das neuronale Netz ausschließlich mit Positivbildern trainiert wird, also mit Bildern, die Verpackungen oder Produkte ohne Fehlstellen zeigen. Mit dieser Ausführungsform kann eine besonders zuverlässige Erkennung von möglichen Fehlstellen in den Bereichen zum Erstellen des Wahrscheinlichkeitsbildes realisiert werden.

Vorrichtung nach Anspruch 2, wobei das neuronale Netz ein nur anhand von fehlstellenfreien Verpackungen und/oder Produkten trainiertes neuronales Netz ist.

Mit dieser Ausführungsform wird jede Abweichung von fehlstellenfreien Verpackungen/Produkten von dem neuronalen Netz zuverlässig erkannt. Hierdurch können falsch negative Identifikationen (also das fälschliche Feststellen von vermeintlich fehlstellenfreien Bereichen im Wahrscheinlichkeitsbild) vermieden werden.

Es kann vorgesehen sein, dass der Bereichserkennungsalgorithmus ein Blob-Algorithmus ist. Blob-Algorithmen sind dem Fachmann grundsätzlich bekannt. Diese sind besonders geeignet, um zusammenhängende Bereiche nach bestimmten Kriterien zu identifizieren und auszuwerten.

In einer Ausführungsform ist vorgesehen, dass die Fehlstellen eines von einem fehlerhaften Teil eines Produkts, einen fehlerhaften Teil einer Verpackung, einer fehlerhaften Siegelnaht umfassen. Die vorliegende Erfindung ist besonders geeignet, um solche Fehlstellen zu erkennen, was insbesondere die weitere Verarbeitung von Produkten und/oder Verpackungen vorteilhaft beeinflussen kann.

Die Bereiche können identisch sein, wobei optional die Bereiche 16 Pixel, 9 Pixel, 4 Pixel oder 1 Pixel groß sind. Die spezifische Wahl der Größe der Bereiche kann insbesondere vorteilhaft sein, wenn Fehlstellen beispielsweise erst bei größeren Gruppen von Pixeln von dem neuronalen Netz zuverlässig erkannt werden können (größere Bereiche) oder wenn sich Fehlstellen selbst bei Betrachtung einzelner Pixel zuverlässig identifizieren lassen. Dass die Bereiche eine Größe von Pixeln aufweisen, ist dabei so zu verstehen, dass im Wahrscheinlichkeitsbild ein Wahrscheinlichkeitswert für eine zusammenhängende Gruppe von Pixeln bestimmt wird (also beispielsweise Rechtecke oder Quadrate im Bild).

Es kann vorgesehen sein, dass die Vorrichtung eine Transporteinrichtung zum Transportieren von Verpackungen und/oder Produkten umfasst und dass die Transporteinrichtung so angeordnet und ausgebildet ist, dass sie Verpackungen und/oder Produkte an der Infrarot-Lichtquelle und dem Infrarotdetektor vorbeizuführen.

Bei der Transporteinrichtung kann es sich beispielsweise um ein Transportband handeln, auf dem die Verpackungen und/oder Produkte entlang einer Transportrichtung transportiert werden. Die Aufnahme des Bildes mittels des Infrarotdetektors kann entweder während des Transports der Verpackungen oder Produkte erfolgen, oder die Transporteinrichtung kann zum Aufnehmen des Bildes angehalten werden. Mit dieser Ausführungsform ist ein hoher Durchsatz von Verpackungen und/oder Produkten möglich.

In einer Ausführungsform ist vorgesehen, dass die Infrarot-Lichtquelle eine diffuse Infrarot-Lichtquelle ist oder dass die Vorrichtung einen Diffusor umfasst, um diffuses Auflicht und/oder Gegenlicht zu erzeugen und/oder dass der Infrarotdetektor eine Kamera, insbesondere eine SWIR-Kamera umfasst. Durch Verwenden einer diffusen Lichtquelle, beziehungsweise eines Diffusors, um diffuses Auflicht und/oder Gegenlicht zu erzeugen, kann im aufgenommenen Bild das Auftreten von Reflexen aufgrund punktartiger Lichtquellen bzw. Infrarotquellen vermieden werden. SWIR-Kameras sind besonders vorteilhaft zur hochauflösenden Aufnahme der notwendigen Infrarotbilder.

Erfindungsgemäß ist weiterhin ein Verfahren zum Erkennen von Fehlstellen einer Verpackung und/oder eines Produktes mittels einer Vorrichtung vorgesehen, die Vorrichtung umfassend eine Infrarot-Lichtquelle, einen Infrarotdetektor und eine Auswerteinrichtung, wobei der Infrarotdetektor und die Infrarot-Lichtquelle so angeordnet sind, dass der Infrarotdetektor ein Bild einer Verpackung und/oder eines Produkts in Auflicht und/oder Durchlicht aufnehmen kann, das Verfahren umfassend ein Bestimmen eines Wahrscheinlichkeitsbildes basierend auf dem Bild mit der Auswerteinrichtung, wobei das Wahrscheinlichkeitsbild Bereichen des Bildes einen Wahrscheinlichkeitswert zuordnet, der indikativ für das Vorhandensein einer Fehlstelle in den Bereichen ist, und, mittels der Auswerteinrichtung, Auswerten des Wahrscheinlichkeitsbild mittels eines Bereichserkennungsalgorithmus der Auswerteinrichtung und bestimmen, ob eine Gruppe von zusammenhängenden Bereichen im Wahrscheinlichkeitsbild für jeden Bereich einen Wahrscheinlichkeitswert oberhalb eines Schwellwertes aufweist, Ausgeben einer für eine Fehlstelle indikative Information, wenn im Wahrscheinlichkeitsbild wenigstens eine Gruppe von zusammenhängenden Bereichen vorhanden ist, für die jeder Bereich einen Wahrscheinlichkeitswert oberhalb des Schwellwertes aufweist.

Mit diesem Verfahren ist ein kostengünstiges und gleichzeitig zuverlässiges Erkennen von Fehlstellen möglich.

Es kann vorgesehen sein, dass die Auswerteinrichtung zum Bestimmen des Wahrscheinlichkeitsbildes ein neuronales Netz, insbesondere ein Convolutional Neural Network umfasst, wobei optional das neuronale Netz ein nur anhand von fehlstellenfreien Verpackungen trainiertes neuronales Netz ist. Mit diesem neuronalen Netz kann das Wahrscheinlichkeitsbild mit hoher Genauigkeit erzeugt werden.

Der Bereichserkennungsalgorithmus kann ein Blob-Algorithmus sein. Ein Blob-Algorithmus ist besonders vorteilhaft geeignet, um zusammenhängende Bereiche basierend auf bestimmten Kriterien, hier das Überschreiten eines Schwellwertes, zu erkennen.

Es kann vorgesehen sein, dass die Fehlstellen eines von einem fehlerhaften Teil eines Produkts, einen fehlerhaften Teil einer Verpackung, einer fehlerhaften Siegelnaht umfassen. Die Erfindung kann hiermit vorteilhaft auf die Lebensmittelindustrie und Pharmaindustrie angewandt werden.

Die Bereiche können identisch sein, wobei optional die Bereiche 16 Pixel, 9 Pixel, 4 Pixel oder 1 Pixel groß sind. Mit dieser Ausführungsform ist eine bedarfsabhängige, zuverlässige Erkennung von Bereichen, die möglicherweise Fehlstellen aufweisen, möglich.

In einer Ausführungsform ist vorgesehen, dass die Vorrichtung eine Transporteinrichtung zum Transportieren von Verpackungen und/oder Produkten umfasst und dass die Transporteinrichtung die Verpackungen und/oder Produkte an der Infrarot-Lichtquelle und dem Infrarotdetektor vorbeiführt. Hierdurch kann der Durchsatz bei gleichzeitig zuverlässiger Erkennung von Fehlstellen erreicht werden.

In einer Ausführungsform ist vorgesehen, dass die Infrarot-Lichtquelle eine diffuse Infrarot-Lichtquelle ist oder dass die Vorrichtung einen Diffusor umfasst, um diffuses Auflicht und/oder Gegenlicht zu erzeugen und/oder dass der Infrarotdetektor eine Kamera, insbesondere eine SWIR-Kamera umfasst. Mit dieser Ausführungsform können qualitativ hochwertige Bilder erzeugt werden, was die nachfolgende Erkennung von Fehlstellen verbessern kann.

### Kurze Beschreibung der Figuren

- Figur 1: zeigt eine Vorrichtung zum Erkennen von Fehlstellen einer Verpackung und/oder eines Produktes, gemäß einer Ausführungsform.
- Figur 2: zeigt ein Fließschema eines Verfahrens zum Erkennen von Fehlstellen einer Verpackung und/oder eines Produktes.

### Ausführliche Beschreibung

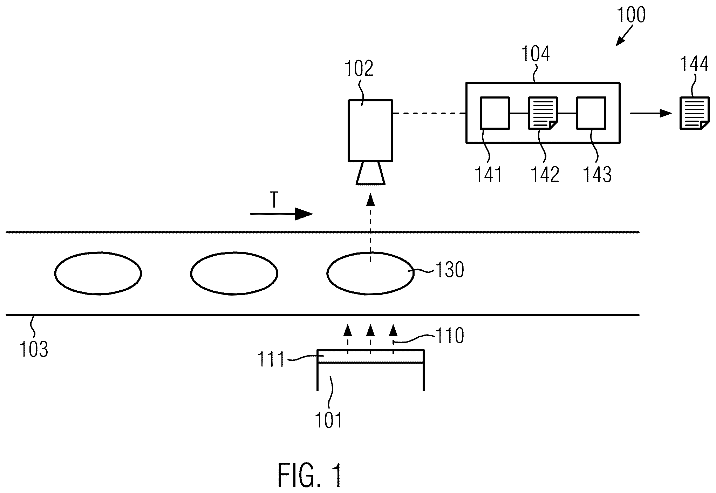

Figur 1 zeigt eine Vorrichtung 100 zum Erkennen von Fehlstellen einer Verpackung und/oder eines Produktes. Die Vorrichtung 100 umfasst eine Infrarot-Lichtquelle 101, mit der infrarotes Licht 110 in Richtung eines Produktes und/oder einer Verpackung 130 emittiert werden kann. Die Vorrichtung 100 umfasst weiterhin einen Infrarotdetektor 102, der das von der Verpackung und/oder dem Produkt 130 emittierte und/oder reflektierte Infrarot-Licht detektieren kann, um so ein Bild, insbesondere ein Infrarot-Bild, zu erzeugen.

Während die Erfindung nicht auf bestimmte Produkte oder Verpackungen beschränkt ist, soll im Folgenden allein zum Zwecke der einfacheren Beschreibung auf die Verarbeitung eines Bildes eines Produktes Bezug genommen werden. Es versteht sich, dass sämtliche der in diesem Zusammenhang beschriebenen Ausführungsformen auch auf Verpackungen oder Verpackungen mit einem eingefüllten Produkt anwendbar sind und entsprechend auch explizit vorgesehen sind.

Die Vorrichtung 100 kann zum Zwecke des Transports der Produkte 130 eine Transporteinrichtung 103 umfassen. Die Transporteinrichtung 103 kann beispielsweise als Förderband ausgebildet sein, auf dem Produkte 130 entlang einer Förderrichtung T transportiert werden können. Die Transporteinrichtung 103 ist diesbezüglich jedoch nicht beschränkt.

Die Vorrichtung umfasst weiterhin erfindungsgemäß eine Auswerteinrichtung 104 (beispielsweise in Form eines Computers mit zugeordnetem Prozessor und Speicher mit geeigneten Programminstruktionen zum Ausführen durch den Prozessor), mit der ein von dem Infrarotdetektor in Auflicht und/oder Durchlicht (abhängig von der Ausgestaltung der Infrarot-Lichtquelle und Positionierung derselben relativ zum Produkt und dem Infrarotdetektor) das aufgenommene Bild ausgewertet werden kann. Zu diesem Zweck erzeugt die Auswerteinrichtung zunächst ein Wahrscheinlichkeitsbild 142 basierend auf dem aufgenommenen Bild. Das Wahrscheinlichkeitsbild ordnet Bereichen des Bildes einem Wahrscheinlichkeitswert zu. Das Wahrscheinlichkeitsbild 142 ist somit nicht zwingend mit dem Bild identisch oder umfasst dessen ursprüngliche Bildinformation. Stattdessen kann es sich bei dem Wahrscheinlichkeitsbild um eine Kombination aus dem Bild und einer weiteren Datenstruktur (insbesondere einer Matrix, die beispielsweise analog zu den Farbinformationen des Bildes in einem weiteren Kanal des Bildes gespeichert sein kann oder als separate Datenstruktur vorliegen kann) handeln, in der Wahrscheinlichkeitswerte (beispielsweise in Form von Werten von 0 bis 255) Bereichen, wie beispielsweise einzelnen Pixeln oder Gruppen von Pixeln (beispielsweise 4 Pixel, 9 Pixel oder 16 Pixel) entsprechenden Bereichen, des Bildes zugeordnet werden.

Um dieses Wahrscheinlichkeitsbild zu erzeugen, kann die Auswerteinrichtung 104 beispielsweise ein neuronales Netz 141, insbesondere ein Convolutional Neural Network, umfassen. Dieses kann speziell darauf trainiert sein, das Wahrscheinlichkeitsbild aus einem Bild des Produktes 130 zu erzeugen. In dem Wahrscheinlichkeitsbild entsprechen jeweiligen Bereichen des Bildes zugeordnete Wahrscheinlichkeitswerte einer Wahrscheinlichkeit dafür, dass in dem betreffenden Bereich eine Fehlstelle vorliegt. Bei der Fehlstelle kann es sich beispielsweise um eine Fehlstelle der Verpackung oder eine Fehlstelle des Produktes oder eine Fehlstelle einer Verpackung mit darin eingefülltem Produkt handeln. Beispielsweise kann es sich bei der Fehlstelle um eine Fehlstelle einer Siegelnaht einer an sich verschlossenen Verpackung mit darin eingefülltem Produkt handeln. Fehler in der Siegelnaht können beispielsweise aber nicht ausschließlich dadurch auftreten, dass das Siegeln nicht vollständig oder wie vorgesehen erfolgt, oder, dass Produkt, wie beispielsweise ein Teil einer Wurstscheibe, falsch in der Verpackung positioniert wurde und somit während des Siegelns im Bereich der zu erzeugenden Siegelnaht positioniert war. Dadurch wird das Siegeln an dieser Stelle verhindert und es entsteht eine Fehlstelle, die in dem Infrarotbild erkannt werden kann.

Auf diese Weise erzeugt die Auswerteinrichtung basierend auf dem ursprünglichen Bild eine Datenstruktur (beispielsweise in Form einer Matrix), in der Bereichen des Originalbildes eindeutig Wahrscheinlichkeitswerte für das mögliche Vorhandensein einer Fehlstelle zugeordnet werden. Die Matrix kann dabei in jedem Eintrag zusätzlich zu dem Wahrscheinlichkeitswert auch einen Score enthalten, der beispielsweise die Zuverlässigkeit bei der Bestimmung des Wahrscheinlichkeitswertes angibt. Dies ist jedoch nicht zwingend. Das Wahrscheinlichkeitsbild kann, wie beschrieben, die Form einer Matrix A aufweisen, wobei die Matrix-Einträge Aᵢⱼ einen Wahrscheinlichkeitswert (und optional einen Score) enthalten. Jeder Wert Aᵢⱼ der Matrix steht somit für einen Bereich des Originalbildes und ordnet diesem eindeutig einen Wahrscheinlichkeitswert für das Vorhandensein einer Fehlstelle in diesem Bereich zu.

Die Auswerteinrichtung 104 umfasst weiterhin einen Bereichserkennungsalgorithmus 143 wie beispielsweise einen Blob-Algorithmus. Diesem Bereichserkennungsalgorithmus wird das Wahrscheinlichkeitsbild 142 zur Verfügung gestellt, um dieses weiter auszuwerten. Der Bereichserkennungsalgorithmus kann dann erfindungsgemäß basierend auf dem Wahrscheinlichkeitsbild bestimmen, ob eine Gruppe von zusammenhängenden Bereichen (also Bereiche des Originalbildes, denen im Wahrscheinlichkeitsbild jeweils Wahrscheinlichkeitswerte zugeordnet sind) existiert, in der jeder Bereich jeweils, also jeder Bereich der zusammenhängenden Bereiche, einen Wahrscheinlichkeitswert oberhalb eines Schwellwerts aufweist. Der Bereichserkennungsalgorithmus kann also prüfen, ob zusammenhängende, bzw. benachbarte Einträge der Matrix A jeweils Wahrscheinlichkeitswerte aufweisen, die oberhalb eines Schwellwerts liegen.

Stellt die Auswerteinrichtung mittels des Bereichserkennungsalgorithmus fest, dass eine solche Gruppe von zusammenhängenden Bereichen existiert, für die die Wahrscheinlichkeitswerte oberhalb eines Schwellwertes liegt, kann die Auswerteinrichtung dann erkennen, dass tatsächlich eine Fehlstelle vorliegt und/oder diese eine Größe aufweist, die für die weitere Behandlung des Produktes relevant ist (beispielsweise ein Aussortieren des Produktes erforderlich macht). Die Auswerteinrichtung 104 kann dann eine Information 144 ausgeben, die indikativ für das Vorhandensein einer Fehlstelle in dem Produkt ist. Die Information 144 kann beispielsweise als Anzeige auf einem Display ausgegeben werden oder kann auch in Form eines Steuerbefehls an eine andere Einrichtung übergeben werden. Die andere Einrichtung kann dann beispielsweise basierend auf diesem Steuerbefehl gesteuert werden, um eine weitere Verarbeitung des Produktes, für das ein Vorhandensein einer Fehlstelle erkannt wurde, auszusortieren oder die weitere Bearbeitung dieses Produktes nicht durchzuführen.

Um eine möglichst zuverlässige Erkennung möglicher Fehlstellen in dem Bild des Produktes 130 zu ermöglichen, kann vorteilhaft vorgesehen sein, dass die Infrarot-Lichtquelle 101 eine diffuse Infrarot-Lichtquelle ist. Hierdurch wird beim Erstellen des Bildes verhindert, dass das Bild Reflexe (zu helle oder zu dunkle Stellen in dem Infrarotbild) aufweist, die fälschlicherweise beim Erstellen des Wahrscheinlichkeitsbildes als Bereiche identifiziert werden könnten, die eine Fehlstelle darstellen. Ist eine diffuse Infrarot-Lichtquelle 101 nicht vorgesehen, so kann alternativ vorgesehen sein, dass einer nicht diffusen Infrarot-Lichtquelle ein Diffusor 111 zugeordnet wird, der die von der Infrarot-Lichtquelle emittierte Infrarotstrahlung in diffuse Infrarotstrahlung 110 umwandelt, bevor diese das Produkt passiert und von dem Infrarotdetektor erkannt wird.

In der Figur 1 ist die Infrarot-Lichtquelle auf der dem Produkt gegenüberliegenden Seite des Infrarotdetektors 102 angeordnet. Diese Anordnung ist so nicht zwingend. Die in Figur 1 dargestellte Anordnung bewirkt, dass das Produkt in Durchlicht von dem Infrarotdetektor detektiert wird. Um dies zu gewährleisten, kann die Transporteinrichtung 103 als transparente (zumindest für Infrarotstrahlung transparente) Transporteinrichtung ausgeführt sein oder einen Bereich umfassen, der für Infrarotstrahlung transparent ist, sodass ein Bestrahlen der Produkte in Durchlicht möglich ist.

Alternativ kann auch vorgesehen sein (hier nicht dargestellt), dass die Infrarot-Lichtquelle auf derselben Seite des Produktes angeordnet ist wie der Infrarotdetektor 102. In diesem Fall ist die Infrarot-Lichtquelle so angeordnet, dass sie das Infrarotlicht in Richtung des Produktes 130 emittiert und das reflektierte Infrarotlicht von dem Infrarotdetektor 102 erfasst werden kann.

Der Infrarotdetektor kann insbesondere eine Kamera umfassen. Besonders bevorzugt ist eine SWIR-Kamera, damit mit dieser gut aufgelöste Infrarotbilder zu geringen Kosten erzeugt werden können.

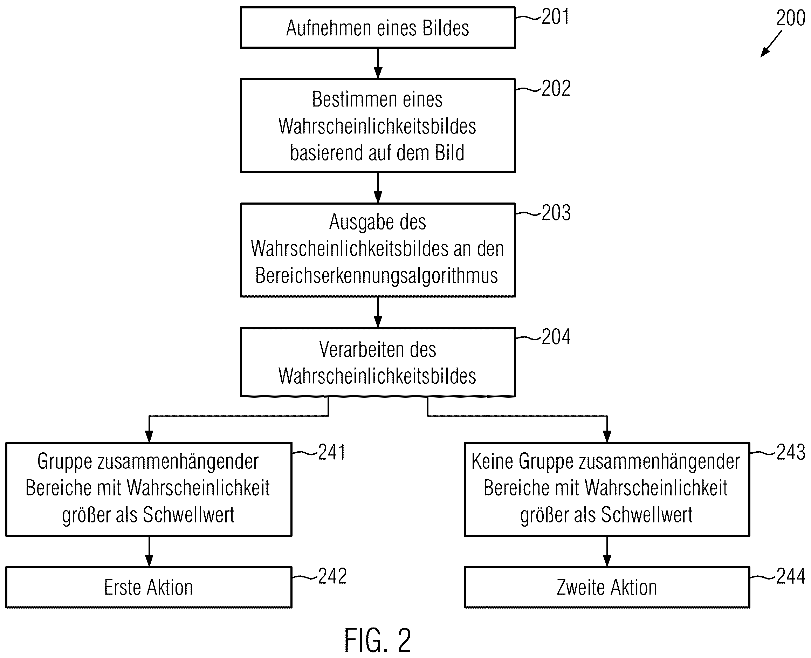

Figur 2 zeigt ein Fließschema einer Ausführungsform eines Verfahrens 200 zum Bestimmen von Fehlstellen einer Verpackung und/oder eines Produktes. Wie bereits oben ausgeführt, wird im Folgenden nur Bezug auf das Bestimmen und Verarbeiten eines Bildes eines Produktes genommen, wohingegen die Erfindung diesbezüglich nicht beschränkt ist und auch das Aufnehmen eines Bildes einer Verpackung und/oder einer Verpackung mit darin eingefülltem Produkt entsprechend mitumfasst ist.

Das Verfahren beginnt mit einem Schritt 201, bei dem ein Bild eines Produktes im Infrarotlicht aufgenommen wird. Dies kann, wie bereits beschrieben, entweder in Gegenlicht oder Auflicht erfolgen und die Erfindung ist diesbezüglich nicht beschränkt. Die Auflösung des Bildes ist grundsätzlich beliebig, kann jedoch möglichst hoch sein, beispielsweise 1024 x 768 Pixeln oder 2048 x 1080 Pixeln oder ähnliches betragen.

Dieses Bild wird dann der Auswerteinrichtung zur Verfügung gestellt, die im Schritt 202 basierend auf dem Bild ein Wahrscheinlichkeitsbild bestimmt. Wie bereits beschrieben, handelt es sich bei diesem Wahrscheinlichkeitsbild nicht zwingend um ein Bild, dessen Bildinformation zumindest teilweise noch identisch zu dem ursprünglich aufgenommenen Bild ist. Stattdessen kann das Wahrscheinlichkeitsbild in Form einer beliebigen Datenstruktur wie beispielsweise einer Matrix vorliegen. Die Information des Wahrscheinlichkeitsbildes umfasst zumindest einen Wahrscheinlichkeitswert, der einem bestimmten Bereich des Originalbildes zugeordnet ist. Beispielsweise kann die Datenstruktur jedem Pixel des Bildes einen Wahrscheinlichkeitswert zuordnen. Alternativ kann die Datenstruktur bzw. das Wahrscheinlichkeitsbild auch einem Teilbereich des Bildes jeweils einen Wahrscheinlichkeitswert zuordnen. Der Teilbereich kann eine Vielzahl von Pixeln des Bildes umfassen, wie beispielsweise 4 Pixel, 9 Pixel oder 16 Pixel. Diesen wird dann gemeinsam im Wahrscheinlichkeitsbild ein Wahrscheinlichkeitswert zugeordnet. Das Wahrscheinlichkeitsbild ist zumindest so aufgebaut, dass jeder Wahrscheinlichkeitswert in dem Wahrscheinlichkeitsbild einem bestimmten Bereich des Bildes (insbesondere dessen Position) zugeordnet wird. Besteht das Bild beispielsweise aus einer Matrix von Pixeln mit Pixelwerten Bᵢⱼ, so kann das Wahrscheinlichkeitsbild in Darstellung einer Matrix Matrixwerte Aᵢⱼ umfassen, wobei die Indizes i, j des Wahrscheinlichkeitsbildes zu den Indizes i, j der Pixel des Bildes zugeordnet sind. Das heißt also, dass in derselben Anordnung der Pixel des Originalbildes in dem Wahrscheinlichkeitsbild "Pixel" in Form von Wahrscheinlichkeitswerten für jeden entsprechenden Pixel des Bildes vorhanden sind. Dies erlaubt eine spätere Erkennung von Bereichen des Bildes, die auf eine Fehlstelle hindeuten, ohne dass hierfür die ursprüngliche Bildinformation noch notwendig ist.

Das Wahrscheinlichkeitsbild wird dann im Schritt 203 an den Bereichserkennungsalgorithmus übergeben. Der Bereichserkennungsalgorithmus kann, wie bereits beschrieben, als Blob-Algorithmus ausgeführt sein. Der Bereichserkennungsalgorithmus verarbeitet im Schritt 204 das Wahrscheinlichkeitsbild. Dazu prüft der Bereichserkennungsalgorithmus, ob Bereiche im Wahrscheinlichkeitsbild existieren, die zusammenhängen und für jeden Bereich dieser Gruppe von Bereichen der zugehörige Wahrscheinlichkeitswert größer als ein vorgegebener Schwellwert ist.

Im Sinne des vorangegangenen Beispiels des Wahrscheinlichkeitsbildes als Matrix sind die Bereiche Matrix-Einträge Aᵢⱼ des Wahrscheinlichkeitsbildes. Zusammenhängende Bereiche im Wahrscheinlichkeitsbild ergeben sich somit aus Matrix-Einträgen, die jeweils zumindest paarweise benachbart sind. Ausgehend von einem Matrix-Eintrag Aᵢⱼ sind zu diesem im Sinne einer Ausführungsform benachbarte Bereiche bzw. Matrix-Einträge, solche mit Index i±1,j oder i,j±1. Einträge der Form A_{i±1j±1} können ebenfalls als benachbart angesehen werden, sind jedoch in der Diagonale der Matrix zum Eintrag Aᵢⱼ versetzt. Im Originalbild bedeutet dies, dass diese Bereiche nur an einer Ecke zusammenhängen.

Alternativ dazu, dass jeder der Bereiche einen Wahrscheinlichkeitswert größer als der Schwellwert aufweist, kann auch vorgesehen sein, dass ein durchschnittlicher Wahrscheinlichkeitswert einer zusammenhängenden Gruppe von Bereichen im Wahrscheinlichkeitsbild größer als ein gegebener Schwellwert ist.

Erkennt der Bereichserkennungsalgorithmus eine Gruppe zusammenhängender Bereiche mit einem Wahrscheinlichkeitswert größer als dem entsprechenden Schwellwert (Schritt 241), kann eine erste Aktion 242 erfolgen. Diese erste Aktion kann insbesondere darin bestehen, dass die Auswerteinrichtung dieser Gruppe zusammenhängender Bereiche das Vorhandensein einer Fehlstelle zuordnet. Zusätzlich kann diese Information beispielsweise an einen Bediener ausgegeben werden, sodass dieser erkennen kann, dass ein Produkt eine Fehlstelle aufweist. Der Bediener kann dann beispielsweise dieses Produkt aus der Transporteinrichtung entnehmen oder eine Vorrichtung steuern, die das entsprechend fehlerhafte Produkt aus der Transporteinrichtung entnimmt.

Alternativ kann die Information hinsichtlich der erkannten Fehlstelle auch als Steuersignal für eine Einrichtung verwendet werden, die das fehlerhafte Produkt aus der Transporteinrichtung entnehmen kann.

Es versteht sich, dass der Bereichserkennungsalgorithmus auch mehrere Gruppen zusammenhängender Bereiche erkennen kann, für die der Wahrscheinlichkeitswert oberhalb eines Schwellwertes liegt. Dies bedeutet letztlich, dass ein Produkt mehrere Fehlstellen aufweist, die vom Bereichserkennungsalgorithmus erkannt werden. Dies ändert nichts am weiteren Vorgehen, insbesondere an dem Ausführen der ersten Aktion 242. Jedoch kann vorgesehen sein, dass die Auswerteinrichtung das Auftreten von Fehlstellen und deren Anzahl pro Produkt speichert und über die Zeit auswertet. Wird bei einer zeitlichen Auswertung beispielsweise erkannt, dass die Häufigkeit von Fehlstellen und/oder die Anzahl von Fehlstellen an Produkten mit der Zeit zunimmt (beispielsweise eine erste Anzahl von Produkten wies im Durchschnitt bei jeder hundertsten Verpackung eine Fehlstelle auf, eine zweite Anzahl von Produkten, die zu einer späteren Zeit untersucht wurde, wies jedoch im Durchschnitt alle fünfzig Produkte eine Fehlstelle auf oder alle zwanzig Produkte zwei Fehlstellen), so kann die Auswerteinrichtung auch diese Information beispielsweise als durchschnittlichen Wert für das Feststellen von Fehlstellen eines Produktes und/oder als durchschnittlicher Wert für die Anzahl der Fehlstellen pro Produkt an einen Bediener ausgeben. Dieser kann dann beispielsweise feststellen, ob sich im Betrieb einer stromauf der Vorrichtung zum Erkennen von Fehlstellen angeordneten Einrichtung eine Verschlechterung eingestellt hat und entsprechende Schritte zu deren Beheben (beispielsweise Wartungsarbeiten oder Reparaturarbeiten) durchführen. Der Bediener kann hierzu von der Auswerteinrichtung auch durch eine entsprechende Information angewiesen werden.

Erkennt der Bereichserkennungsalgorithmus hingegen für ein Produkt keine Gruppe zusammenhängender Bereiche, deren jeweilige Wahrscheinlichkeitswerte größer als der Schwellwert sind oder deren durchschnittlicher Wahrscheinlichkeitswert für das Vorhandensein einer Fehlstelle größer als ein entsprechender Schwellwert ist (Schritt 243), so kann eine zweite Aktion 244 erfolgen. Diese zweite Aktion 244 kann beispielsweise eine aktualisierte Anzeige an einen Bediener umfassen, dass der Betrieb der Vorrichtung ordnungsgemäß funktioniert. Es kann aber auch vorgesehen sein, dass die zweite Aktion 244 keine tatsächliche Aktion umfasst, sondern lediglich ein Fortfahren des Betriebs bewirkt.

Das im Zusammenhang mit Figur 2 beschriebene Verfahren wird bevorzugt für jedes Produkt, das an dem Infrarotdetektor vorbeigeführt wird, durchgeführt, sodass jedes Produkt auf Fehlstellen hin untersucht wird.

Es hat sich gezeigt, dass zum Vermeiden falsch-negativer Erkennungen (also das Nichterkennen von Fehlstellen des Produktes, obwohl diese vorhanden sind) ein neuronales Netz vorteilhaft ausschließlich mit fehlstellenfreien Produkten bzw. Bildern solcher Produkte trainiert werden kann. Abweichungen von solchen fehlstellenfreien Produkten werden von dem trainierten neuronalen Netz dann besonders zuverlässig erkannt. Ob es sich bei den Bereichen dann tatsächlich um Fehlstellen handelt, wird durch die nachgelagerte Auswertung des Wahrscheinlichkeitsbildes mit dem Bereichserkennungsalgorithmus geprüft. Denn dieser prüft eine verglichen mit dem Wahrscheinlichkeitsbild größere Region des ursprünglichen Bildes auf etwaige Abweichungen (da Gruppen zusammenhängender Bereiche im Wahrscheinlichkeitsbild identifiziert werden).

## Patentansprüche

1. Vorrichtung (100) zum Erkennen von Fehlstellen einer Verpackung und/oder eines Produktes (130), die Vorrichtung umfassend eine Infrarot-Lichtquelle (101), einen Infrarotdetektor (102) und eine Auswerteinrichtung (104), wobei der Infrarotdetektor und die Infrarot-Lichtquelle so angeordnet sind, dass der Infrarotdetektor ein Bild einer Verpackung und/oder eines Produktes (130) in Auflicht und/oder Durchlicht aufnehmen kann, und wobei die Auswerteinrichtung (104) ausgebildet ist, basierend auf dem Bild ein Wahrscheinlichkeitsbild (142) zu bestimmen, wobei das Wahrscheinlichkeitsbild Bereichen des Bildes einen Wahrscheinlichkeitswert zuordnet, der indikativ für das Vorhandensein einer Fehlstelle in den Bereichen ist, und wobei die Auswerteinrichtung (104) ausgebildet ist, das Wahrscheinlichkeitsbild mittels eines Bereichserkennungsalgorithmus (143) auszuwerten und zu bestimmen, ob eine Gruppe von zusammenhängenden Bereichen im Wahrscheinlichkeitsbild für jeden Bereich einen Wahrscheinlichkeitswert oberhalb eines Schwellwertes aufweist, und eine für eine Fehlstelle indikative Information (144) auszugeben, wenn im Wahrscheinlichkeitsbild wenigstens eine Gruppe von zusammenhängenden Bereichen vorhanden ist, für die jeder Bereich einen Wahrscheinlichkeitswert oberhalb des Schwellwertes aufweist.

2. Vorrichtung (100) nach Anspruch 1, wobei die Auswerteinrichtung zum Bestimmen des Wahrscheinlichkeitsbildes ein neuronales Netz (141), insbesondere ein Convolutional Neural Network umfasst.

3. Vorrichtung (100) nach Anspruch 2, wobei das neuronale Netz (141) ein nur anhand von fehlstellenfreien Verpackungen und/oder Produkten trainiertes neuronales Netz ist.

4. Vorrichtung (100) nach einem der Ansprüche 1 bis 3, wobei der Bereichserkennungsalgorithmus (143) ein Blob-Algorithmus ist.

5. Vorrichtung (100) nach einem der Ansprüche 1 bis 4, wobei die Fehlstellen eines von einem fehlerhaften Teil eines Produkts, einen fehlerhaften Teil einer Verpackung, einer fehlerhaften Siegelnaht umfassen.

6. Vorrichtung (100) nach einem der Ansprüche 1 bis 6, wobei die Bereiche identisch sind, wobei optional die Bereiche 16 Pixel, 9 Pixel, 4 Pixel oder 1 Pixel groß sind.

7. Vorrichtung (100) nach einem der Ansprüche 1 bis 6, wobei die Vorrichtung eine Transporteinrichtung (103) zum Transportieren von Verpackungen und/oder Produkten umfasst und wobei die Transporteinrichtung so angeordnet und ausgebildet ist, dass sie Verpackungen und/oder Produkte an der Infrarot-Lichtquelle (101) und dem Infrarotdetektor (102) vorbeizuführen.

8. Vorrichtung (100) nach einem der Ansprüche 1 bis 7, wobei die Infrarot-Lichtquelle (101) eine diffuse Infrarot-Lichtquelle ist oder wobei die Vorrichtung einen Diffusor (111) umfasst, um diffuses Auflicht und/oder Gegenlicht zu erzeugen; und/oder wobei der Infrarotdetektor (102) eine Kamera, insbesondere eine SWIR-Kamera umfasst.

9. Verfahren zum Erkennen von Fehlstellen einer Verpackung und/oder eines Produktes mittels einer Vorrichtung (100), die Vorrichtung (100) umfassend eine Infrarot-Lichtquelle (101), einen Infrarotdetektor (102) und eine Auswerteinrichtung (104), wobei der Infrarotdetektor und die Infrarot-Lichtquelle so angeordnet sind, dass der Infrarotdetektor ein Bild einer Verpackung und/oder eines Produkts in Auflicht und/oder Durchlicht aufnehmen kann, das Verfahren umfassend ein Bestimmen eines Wahrscheinlichkeitsbildes (142) basierend auf dem Bild mit der Auswerteinrichtung (104), wobei das Wahrscheinlichkeitsbild Bereichen des Bildes einen Wahrscheinlichkeitswert zuordnet, der indikativ für das Vorhandensein einer Fehlstelle in den Bereichen ist, und, mittels der Auswerteinrichtung, Auswerten des Wahrscheinlichkeitsbild mittels eines Bereichserkennungsalgorithmus (143) der Auswerteinrichtung und bestimmen, ob eine Gruppe von zusammenhängenden Bereichen im Wahrscheinlichkeitsbild (142) für jeden Bereich einen Wahrscheinlichkeitswert oberhalb eines Schwellwertes aufweist, Ausgeben einer für eine Fehlstelle indikative Information (144), wenn im Wahrscheinlichkeitsbild wenigstens eine Gruppe von zusammenhängenden Bereichen vorhanden ist, für die jeder Bereich einen Wahrscheinlichkeitswert oberhalb des Schwellwertes aufweist.

10. Verfahren nach Anspruch 9, wobei die Auswerteinrichtung (104) zum Bestimmen des Wahrscheinlichkeitsbildes (142) ein neuronales Netz (141), insbesondere ein Convolutional Neural Network umfasst, wobei optional das neuronale Netz ein nur anhand von fehlstellenfreien Verpackungen trainiertes neuronales Netz ist.

11. Verfahren nach Anspruch 9 oder 10, wobei der Bereichserkennungsalgorithmus (143) ein Blob-Algorithmus ist.

12. Verfahren nach einem der Ansprüche 9 bis 11, wobei die Fehlstellen eines von einem fehlerhaften Teil eines Produkts, einen fehlerhaften Teil einer Verpackung, einer fehlerhaften Siegelnaht umfassen.

13. Verfahren nach einem der Ansprüche 9 bis 12, wobei die Bereiche identisch sind, wobei optional die Bereiche 16 Pixel, 9 Pixel, 4 Pixel oder 1 Pixel groß sind.

14. Verfahren nach einem der Ansprüche 9 bis 13, wobei die Vorrichtung (100) eine Transporteinrichtung (103) zum Transportieren von Verpackungen und/oder Produkten umfasst und wobei die Transporteinrichtung die Verpackungen und/oder Produkte an der Infrarot-Lichtquelle (101) und dem Infrarotdetektor (102) vorbeiführt.

15. Verfahren nach einem der Ansprüche 9 bis 14, wobei die Infrarot-Lichtquelle (101) eine diffuse Infrarot-Lichtquelle ist oder wobei die Vorrichtung einen Diffusor (111) umfasst, um diffuses Auflicht und/oder Gegenlicht zu erzeugen; und/oder
wobei der Infrarotdetektor (102) eine Kamera, insbesondere eine SWIR-Kamera umfasst.
